# FASCICULE DE BREVET EUROPEEN

(11) **EP 3 856 586 B1**
(45) Date de publication et mention de la délivrance du brevet: **13.09.2023**
(21) Numéro de dépôt: 19773098.9
(22) Date de dépôt: 25.09.2019
(51) Int. Cl.: B60S 1/56, B60S 1/52

(54) **SYSTEME DE NETTOYAGE D'UNE PLURALITE DE CAPTEURS D'UN VEHICULE AUTOMOBILE**
SYSTEM ZUR REINIGUNG EINER VIELZAHL VON SENSOREN EINES KRAFTFAHRZEUGS
SYSTEM FOR CLEANING A PLURALITY OF SENSORS OF A MOTOR VEHICLE

(30) Priorité: 28.09.2018 FR 1858951
(43) Date de publication de la demande: 04.08.2021
(73) Titulaire: Valeo Systèmes d'Essuyage, 78322 Le Mesnil Saint Denis (FR)
(72) Inventeur: TREBOUET, Marcel, 78322 Le Mesnil Saint Denis (FR)
(74) Mandataire: Valeo Visibility
(86) Numéro de dépôt international: PCT/EP2019/075941
(87) Numéro de publication internationale: WO 2020/064880

(56) Documents cités:
- WO-A1-2018/187089
- WO-A1-2018/188823
- WO-A1-2018/189019
- DE-A1- 10 115 975
- DE-A1- 19 537 790
- DE-A1-102014 200 097

## Description

L'invention se rapporte au domaine des systèmes de nettoyage équipant les véhicules automobiles. Elle concerne plus particulièrement les systèmes de nettoyage de capteurs équipant de tels véhicules.

Les véhicules, et particulièrement les véhicules automobiles, comprennent de plus en plus de systèmes automatisés, qui sont notamment des systèmes d'aide à la conduite. De tels systèmes d'aide à la conduite comprennent notamment un ou plusieurs module(s) de détection d'un environnement du véhicule et de paramètres externes à ce véhicule ainsi qu'au moins une unité de contrôle configurée pour interpréter les informations ainsi recueillies et pour prendre les décisions qui s'imposent en conséquence de ces informations.

Dès lors, on comprend qu'il est particulièrement important d'assurer le bon fonctionnement de ces modules de détection, tout au long de la vie du véhicule. Notamment, ces modules de détection sont, le plus souvent, agencés à l'extérieur du véhicule, par exemple portés par la carrosserie de ce véhicule, et peuvent par exemple être salis, ce qui peut rendre difficile, voire impossible, l'acquisition d'informations par ces modules de détection. Il faut donc prévoir un système de nettoyage capable de retirer efficacement les détritus, salissures, éléments organiques et autres éléments perturbateurs qui peuvent se déposer et gêner l'acquisition d'images par ces modules de détection. Une solution connue est de projeter du fluide lave glace en quantité sur une surface optique du module de détection concerné puis de sécher cette surface, mais il convient de noter qu'une telle solution peut être coûteuse en fluide lave glace, ou en eau, si la projection est faite massivement sans stratégie particulière, d'autant plus dans le cas de véhicule autonome où de nombreux modules de détection sont mis en oeuvre sur le pourtour du véhicule.

On connaît différentes architectures de tels systèmes de nettoyage comportant une pluralité de dispositifs de projection d'un produit nettoyant. Ces dispositifs de projection sont disposés, par exemple, en face avant et/ou en face arrière et/ou sur un rétroviseur du véhicule pour permettre, par exemple, le nettoyage d'une ou plusieurs surfaces vitrées associées à un ou plusieurs capteurs.

Pour alimenter en produit nettoyant ces dispositifs de projection, l'architecture du système de nettoyage comporte un réservoir et une pompe reliée à chacun des dispositifs de projection via une ou plusieurs électrovannes dérivant le produit nettoyant issu du réservoir vers des conduites respectivement associées à chacun des dispositifs de projection du véhicule. Ainsi, dans une telle architecture, les dispositifs de projection sont alimentés par la pompe du système de nettoyage distinctement les uns des autres, l'électrovanne précitée dirigeant le produit nettoyant pompé du réservoir vers l'une ou l'autre des conduites.

Dans un contexte de développement grandissant des dispositifs d'aide à la conduite sur les véhicules automobiles, ainsi que dans le contexte du développement de véhicules autonomes, le nombre et le type de capteurs installés sur un véhicule est amené à être de plus en plus important. En fonction de leur type, ces capteurs présentent des exigences et des contraintes de nettoyage qui peuvent être très diverses, par exemple en termes de quantité et/ou de débit de produit nettoyant à mettre en oeuvre. Toutefois, avec une architecture telle que celle qui vient d'être rapidement évoquée, les paramètres de délivrance du produit nettoyant sont les mêmes quel que soit le capteur à nettoyer, et on comprend qu'ils sont définis en fonction du capteur pour lequel ces exigences sont les plus contraignantes. L'utilisation d'une architecture telle que précédemment évoquée peut alors conduire à une consommation inutile de produit nettoyant au regard des exigences de nettoyage des différents capteurs. DE 10 2 014 200097 A1 divulgue le préambule de la revendication 1.

La présente invention a pour but de pallier cet inconvénient et de proposer un système de nettoyage dont la mise en oeuvre n'entraîne pas de consommation inutile de produit nettoyant, tout en respectant les exigences de qualité de nettoyage de différents capteurs installés sur le véhicule.

Dans ce but, l'invention a pour objet un système de nettoyage d'une pluralité de capteurs d'un véhicule automobile, comprenant une pluralité de dispositifs de projection d'un fluide de nettoyage sur les capteurs et comprenant un réservoir de stockage du fluide de nettoyage, le système de nettoyage comportant un circuit de distribution relié au réservoir de stockage et sur lequel chacun des dispositifs de projection est raccordé via une électrovanne qui lui est propre, le système de nettoyage comportant en outre une unité électronique de gestion configurée pour commander le fonctionnement d'au moins le circuit de distribution, caractérisé en ce qu'il comporte une pompe électronisée dont une unité électronique de commande est configurée pour modifier un paramètre d'écoulement du fluide de nettoyage dans le circuit de distribution, selon la ou les électrovannes qui vont être activées et les dispositifs de projection qui vont être alimentés par le fluide de nettoyage.

On entend ici par nettoyage d'un capteur une opération de nettoyage d'une surface optique, par exemple une surface vitrée transparente, de ce capteur, pour retirer de cette dernière un certain nombre de poussières, débris ou salissures dont la présence, sur la surface optique du capteur considéré, peut nuire à la qualité de la détection et/ou de la mesure effectuées par ce capteur.

Le fluide de nettoyage peut, selon différents exemples, être un produit liquide ou gazeux pouvant être projeté sur une surface optique telle que précitée, en vue du nettoyage de celle-ci. Selon différents exemples non exhaustifs, le fluide de nettoyage peut être de l'eau, un liquide lave-glace, ou de l'air.

Le circuit de distribution désigne ici un ensemble de conduits et canalisations configurés pour acheminer le fluide de nettoyage depuis le réservoir de stockage du système de nettoyage selon l'invention jusqu'aux différents dispositifs de projection de ce fluide de nettoyage sur les surfaces optiques de la pluralité de capteurs. Selon un exemple, le circuit de distribution comprend un conduit principal à partir duquel s'étend une pluralité de branches dont chacune est configurée pour acheminer du fluide de nettoyage vers un ou plusieurs capteurs. Plus précisément, les branches du circuit de distribution sont configurées pour acheminer du fluide de nettoyage vers un ou plusieurs dispositifs de projection associés à un ou plusieurs capteurs. Tel que cela a été précisé, le circuit de distribution comprend également une pluralité d'électrovannes gouvernant la circulation du fluide de nettoyage dans les branches précitées, c'est-à-dire entre le réservoir de stockage de fluide et les dispositifs de projection.

L'unité électronique de gestion, configurée pour commander le fonctionnement d'au moins le circuit de distribution, commande notamment le fonctionnement des électrovannes. Selon un exemple, l'unité électronique de gestion commande également le fonctionnement d'un ou plusieurs dispositifs de projection du fluide de nettoyage sur les surfaces optiques des capteurs correspondants.

Selon l'invention, le circuit de distribution comprend une pompe du type dit électronisé, configurée pour modifier un paramètre d'écoulement du fluide de nettoyage dans le circuit de distribution. Une telle pompe comprend notamment une unité électronique de commande configurée pour modifier la vitesse de rotation du moteur électrique gouvernant son fonctionnement sur la base d'une variation du signal de commande du fonctionnement de ce moteur électrique.

Selon l'invention, la pompe électronisée est configurée pour modifier un paramètre d'écoulement du fluide de nettoyage. Plus précisément, l'invention prévoit que, dès lors qu'une opération de nettoyage d'un ou plusieurs capteurs doit être réalisée, la pompe électronisée est commandée de manière à modifier un paramètre d'écoulement du fluide de nettoyage dans la ou les branches correspondantes du circuit de fluide, de manière à optimiser la consommation de fluide de nettoyage en fonction de la nature du ou des capteurs à nettoyer.

Selon différents exemples, le paramètre d'écoulement précédemment évoqué peut être la pression ou le débit du fluide de nettoyage. L'invention permet ainsi d'ajuster le paramètre d'écoulement choisi, par exemple une pression du fluide de nettoyage, dans une ou plusieurs branches du circuit de distribution alimentant des dispositifs de projection associés aux capteurs à nettoyer. Autrement dit, l'invention permet de moduler l'écoulement du fluide de nettoyage destiné à être projeté sur un ou plusieurs capteurs d'un véhicule automobile équipé d'un système de nettoyage selon l'invention.

L'unité électronique de gestion, qui commande le fonctionnement des électrovannes gouvernant la distribution de fluide de nettoyage dans les différentes branches du circuit de distribution, et l'unité électronique de commande de la pompe électronisée sont donc avantageusement reliées l'une à l'autre et sont respectivement configurées pour communiquer chacune avec l'autre.

Tel que cela a été évoqué précédemment, le système de nettoyage comporte une pompe électronisée dont une unité électronique de commande est configurée pour modifier un paramètre d'écoulement du fluide de nettoyage dans le circuit de distribution. La modification du paramètre d'écoulement du fluide de nettoyage est fonction de paramètres propres aux types de capteurs que l'on doit nettoyer et/ou fonction de paramètres relatifs à l'environnement extérieur au véhicule et notamment la température ambiante et/ou relatifs à des paramètres de roulage du véhicule et notamment sa vitesse.

En d'autres termes, l'unité électronique de commande de la pompe électronisée est configurée pour générer une instruction de commande de la pompe électronisée en fonction de différents paramètres qu'est susceptible de détecter ou de recevoir l'unité électronique de commande. L'instruction de commande est ici à comprendre au sens large comme une instruction combinée de commande du fonctionnement de la pompe électronisée et d'ajustement, par la pompe électronisée, du paramètre d'écoulement choisi. Selon un exemple, ces instructions de commande du fonctionnement de la pompe électronisée et d'ajustement du paramètre d'écoulement choisi peuvent être simultanées.

Selon une caractéristique de l'invention, l'unité électronique de commande est configurée pour générer une instruction de commande de la pompe électronisée en fonction de données relatives à la nature du ou des capteurs à nettoyer.

Selon un exemple, la donnée relative à la nature du ou des capteurs à nettoyer peut être le type de ces capteurs. A titre d'exemple non limitatif, la pression de fluide nécessaire au nettoyage d'un capteur d'un dispositif de télédétection fonctionnant par émission/réception d'ondes électromagnétiques du type LIDAR, acronyme pour l'expression anglaise « Light Détection And Ranging », est de l'ordre de 4 bars, alors que la pression de fluide nécessaire au nettoyage d'un capteur d'une caméra de vision est de l'ordre de 2 bars. Par un ajustement, par exemple, de la pression au sein des branches du circuit de distribution alimentant en fluide de nettoyage divers capteurs tels que précités, l'invention permet donc d'optimiser la consommation de fluide de nettoyage au sein du véhicule.

L'invention atteint ainsi le but qu'elle s'était fixé, en proposant, pour différents types de capteurs installés sur un véhicule automobile, un nettoyage efficace, sans consommation inutile de fluide de nettoyage. Ceci permet, en outre, d'ajuster la capacité du réservoir de stockage de fluide de nettoyage et, donc, de faciliter l'implantation du système de nettoyage dans le véhicule, tout en allégeant ce dernier.

Selon différents caractéristiques, prises séparément ou en combinaison :
- l'unité électronique de commande est configurée pour générer une instruction de commande de la pompe électronisée en fonction d'un nombre de capteurs à nettoyer. Selon différents exemples, il peut, par exemple, s'agir d'un nombre total de capteurs installés sur le véhicule, ou il peut s'agir d'un nombre de capteurs de même type, ou d'un nombre de capteurs dont les exigences de nettoyage sont similaires.
- l'unité électronique de commande de la pompe électronisée est configurée pour générer une instruction de commande de la pompe en fonction d'une température extérieure. La température extérieure est ici à comprendre comme la température à laquelle est soumis le fluide de nettoyage circulant dans la ou les branches du circuit de fluide alimentant le ou les dispositifs de projection correspondant au(x) capteur(s) à nettoyer. La viscosité du fluide de nettoyage pouvant varier en fonction d'une telle température, la prise en compte de cette dernière lors de l'instruction de commande de la pompe électronisée permet d'augmenter la précision de l'ajustement du paramètre d'écoulement choisi.
- l'unité électronique de commande de la pompe électronisée est configurée pour générer une instruction de commande de la pompe en fonction d'une vitesse de déplacement du véhicule. En effet, une vitesse de déplacement élevée pourra avoir pour résultat une dispersion de fluide de nettoyage lors de la projection de celui-ci sur les surfaces optiques des capteurs à nettoyer, ce qui se traduira par une perte de fluide de nettoyage. L'ajustement de l'écoulement du fluide de nettoyage grâce à la pompe électronisée précédemment définie, et notamment l'ajustement de la pression du fluide en sortie des dispositifs de projection, permet alors de diminuer l'impact d'une telle dispersion sur l'efficacité du nettoyage du ou des capteurs considérés.
- l'unité électronique de commande de la pompe électronisée est configurée pour générer une séquence de contrôle du fonctionnement des électrovannes du circuit de distribution. Avantageusement, le contrôle précité consiste principalement en une vérification de l'état d'ouverture et/ou de fermeture d'une ou plusieurs électrovannes du circuit de distribution. Préférentiellement, le contrôle précité consiste principalement en une vérification de l'état de fermeture d'une ou plusieurs électrovannes du circuit de distribution. Plus précisément, l'invention prévoit que, dans un véhicule équipé d'un système de nettoyage tel que précédemment décrit, dès lors qu'un ou plusieurs capteurs nécessitent une opération de nettoyage, une requête de nettoyage est acheminée vers l'unité électronique de gestion du circuit de distribution, précédemment définie. Une telle requête de nettoyage peut, par exemple, provenir d'un module central de contrôle du véhicule configuré pour communiquer avec l'ensemble des capteurs dont le véhicule est équipé. Avantageusement, la requête de nettoyage précitée comprend une ou plusieurs informations relatives, par exemple, au nombre et/ou au type de capteurs devant être nettoyés, ainsi que, par exemple, à leur localisation sur le véhicule. Selon un aspect de l'invention, dès lors que ces informations sont transmises à l'unité électronique de gestion du circuit de fluide, l'unité électronique de commande de la pompe électronisée génère une séquence de contrôle d'une ou plusieurs électrovannes du circuit de distribution. Selon un exemple avantageux, cette séquence de contrôle est effectuée sur les électrovannes qui gouvernent la distribution de fluide de nettoyage à un ou plusieurs capteurs du même type que celui ou ceux visés par la requête de nettoyage précédemment définie, et/ou installés, sur le véhicule, à proximité des capteurs visés par la requête de nettoyage précitée. Notamment dans ce dernier cas, il est notable que des capteurs disposés à proximité les uns des autres peuvent être configurés pour acquérir des informations redondantes sur une même scène de route, afin de s'assurer d'obtenir une image la plus fidèle possible de la scène de route, et un système d'aide à la conduite, et notamment pour le pilotage d'un véhicule autonome, a besoin que l'on détecte en continu l'ensemble de la scène de route. Il faut ainsi s'assurer qu'au moins un des capteurs ayant pour fonction de détecter les évènements sur une telle scène de route soit en état de fonctionnement.

Il résulte de ce qui précède que l'invention s'étend également à un procédé de nettoyage d'au moins un parmi une pluralité de capteurs d'un véhicule automobile par un système de nettoyage tel qu'il vient d'être décrit, un tel procédé comprenant :
- une étape de réception, par une unité électronique de gestion d'un circuit de distribution de fluide de nettoyage du système de nettoyage configurée pour communiquer avec une unité électronique de commande d'une pompe électronisée du système de nettoyage, d'une requête de nettoyage d'au moins un parmi une pluralité de capteurs,
- une étape d'identification d'au moins une électrovanne du circuit de distribution gouvernant l'acheminement de fluide de nettoyage vers ledit au moins un parmi la pluralité de capteurs à nettoyer,
- une étape de génération, par l'unité de commande de la pompe électronisée, d'une instruction de modification d'un paramètre d'écoulement du fluide de nettoyage dans le circuit de distribution en fonction du type de la ou des électrovannes identifiées dans l'étape précédente.

Avantageusement, le procédé selon l'invention peut également comprendre une étape de génération d'une séquence de contrôle du fonctionnement d'une ou plusieurs électrovannes du circuit de distribution.

L'invention concerne en outre un véhicule automobile équipé d'un système de nettoyage conforme à ce qui a été décrit précédemment.

D'autres caractéristiques, détails et avantages de l'invention ressortiront plus clairement à la lecture de la description donnée ci-après à titre indicatif en relation avec des dessins dans lesquels :
- la figure 1 illustre une vue schématique d'un véhicule automobile équipé d'un système de nettoyage selon l'invention.
- et la figure 2 illustre schématiquement les différentes étapes d'un procédé selon l'invention.

Il faut tout d'abord noter que si les figures exposent l'invention de manière détaillée pour sa mise en oeuvre, ces figures peuvent bien entendu servir à mieux définir l'invention le cas échéant. Il est également à noter que ces figures n'exposent qu'une partie des exemples de réalisation possibles selon l'invention.

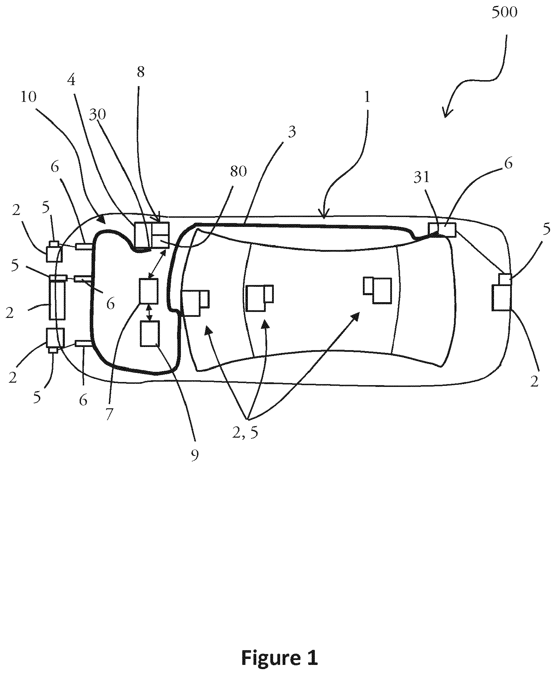

La figure 1 illustre schématiquement, en vue de dessus, un véhicule 500 automobile équipé d'un système de nettoyage 1 selon l'invention, qui permet le nettoyage d'une pluralité de capteurs 2 installés sur le véhicule 500. A titre d'exemple non limitatif, les capteurs 2 peuvent être des capteurs optiques, par exemple configurés pour détecter différentes informations relatives à l'environnement du véhicule (de manière non exhaustive : tracé de la route sur laquelle évolue le véhicule, présence d'obstacles, etc ...) afin de fournir une assistance à la conduite du véhicule.

En référence à la figure 1, le système de nettoyage 1 selon l'invention comprend un conduit d'acheminement de fluide 3 configuré pour acheminer un fluide nettoyant depuis un réservoir de stockage 4 jusqu'à une pluralité de dispositifs de projection 5 du fluide nettoyant, les dispositifs de projection 5 étant disposés, dans le véhicule 500, pour être associés aux capteurs 2. Selon différents exemples, un dispositif de projection 5 peut être associé à chaque capteur 2, ou un dispositif de distribution 5 peut être associé à plusieurs capteurs 2, ou plusieurs dispositifs de distribution 5 peuvent être associés à un même capteur 2.

Chaque dispositif de projection 5 est relié au conduit d'acheminement de fluide 3, indépendamment des autres dispositifs de projection 5, par une ou plusieurs canalisations non représentées sur la figure 1. Ces canalisations forment, avec le ou les dispositifs de projection 5 auxquels elles sont associées, des branches du circuit de distribution 10 telles que précédemment définies. Le conduit d'acheminement de fluide 3 assure ainsi l'alimentation en fluide nettoyant de l'ensemble des dispositifs de projection 5 installés sur le véhicule 500. Comme il a été indiqué précédemment, le fluide nettoyant peut être liquide ou gazeux : à titre d'exemples non exhaustifs, le fluide de nettoyage peut être de l'eau, un liquide lave-glace, ou de l'air.

Selon l'exemple plus particulièrement illustré par la figure 1, le conduit d'acheminement de fluide 3 s'étend, au sein du véhicule 500, entre une première extrémité 30 située à l'avant du véhicule 500 et une deuxième extrémité 31 située au voisinage de l'arrière de ce dernier. Mais il sera compris, sans sortir du contexte de l'invention, que le conduit d'acheminement de fluide peut prendre d'autres configurations, et par exemple présenter une forme de boucle.

Avantageusement, une électrovanne 6 est placée entre chaque dispositif de projection 5 et le conduit d'acheminement de fluide 3, l'activation d'une électrovanne 6 permettant de prélever tout ou partie du fluide circulant dans le conduit d'acheminement de fluide pour le diriger vers le dispositif de projection 5 correspondant.

Le conduit d'acheminement de fluide 3, le réservoir de stockage 4, les dispositifs de projection 5 et les électrovannes 6 forment ensemble un circuit de distribution 10 du fluide de nettoyage au sein du système de nettoyage 1 selon l'invention. Les électrovannes 6 peuvent être disposées en barette dans un bloc fonctionnel ou être réparties le long du conduit d'acheminement de fluide 3, tel que cela est illustré schématiquement sur la figure 1.

Le système de nettoyage 1 selon l'invention comprend également une unité électronique de gestion 7 configurée pour commander le fonctionnement du circuit de distribution 10. Plus précisément, l'unité électronique de gestion 7 commande notamment le fonctionnement des électrovannes 6 et des dispositifs de projection 5 précédemment définis, par exemple par courant porteur dans une ligne de commande s'étendant dans le circuit de distribution ou par communication sans fil de type radio.

Selon l'invention, le système de nettoyage 1 comprend également une pompe électronisée 8 configurée pour piloter l'acheminement du fluide nettoyant depuis le réservoir de stockage 4 vers chacun des dispositifs de projection 5. Comme le montre la figure 1, la pompe électronisée 8 est disposée en sortie du réservoir de stockage et reliée à la première extrémité 30, précédemment définie, du conduit d'acheminement de fluide 3.

Selon l'invention, la pompe électronisée 8 est configurée pour modifier un paramètre d'écoulement du fluide de nettoyage au sein du circuit de distribution 10 précédemment défini.

Le paramètre d'écoulement modifié par la pompe électronisée 8 peut notamment ici être une pression du fluide de nettoyage au sein du circuit de distribution 10. En effet, les capteurs 2 pouvant être de types différents, les exigences relatives au nettoyage de leurs surfaces optiques peuvent varier d'un capteur 2 à un autre capteur 2, par exemple en termes de pression du fluide de nettoyage. A titre d'exemple, comme précédemment indiqué, le nettoyage d'une surface optique d'un capteur d'un ensemble de type LIDAR requiert une pression de fluide de nettoyage de l'ordre de 4 bars, alors que le nettoyage d'une surface optique d'une caméra optique requiert une pression de fluide de nettoyage de l'ordre de 2 bars seulement.

Alternativement, le paramètre d'écoulement précité peut être un débit du fluide de nettoyage.

Selon l'invention, la pompe électronisée 8 comprend une unité électronique de commande 80, schématiquement représentée sur la figure 1, configurée pour modifier la vitesse de rotation du moteur électrique d'entraînement de la pompe électronisée 8 et, ainsi, modifier l'écoulement du fluide de nettoyage acheminé par cette dernière.

Tel que cela sera plus amplement décrit en relation la description d'un procédé de nettoyage, on comprend que l'invention permet ainsi de moduler un paramètre d'écoulement du fluide de nettoyage dans l'ensemble du circuit de distribution 10 selon la ou les électrovannes 6 qui vont être activées et les dispositifs de distribution qui vont être alimentés par le fluide de nettoyage circulant dans le conduit 3. Si le système de nettoyage est mis en oeuvre pour le nettoyage d'un capteur d'un ensemble de type LIDAR, l'unité électronique de commande 80 pilote la pompe électronisée 8 pour que celle-ci délivre un fluide nettoyant à une pression de 4 bars dans l'ensemble du circuit de distribution. Si dans le même temps, notamment dans une autre zone du véhicule, un capteur de type caméra de vision doit être nettoyé, le fluide nettoyant à la pression de 4 bars sera utilisé bien que la pression suffisante pour un nettoyage optimal soit de 2 bars. Par contre, si le système de nettoyage n'est mis en oeuvre que pour le nettoyage de capteur(s) type caméra de vision, l'unité électronique de commande 80 pilote la pompe électronisée 8 pour que celle-ci délivre un fluide nettoyant à une pression de 2 bars dans l'ensemble du circuit de distribution.

Par ailleurs, la pompe électronisée est configurée pour recevoir des données relatives aux conditions de circulation du véhicule, aussi bien des conditions propres au véhicule comme sa vitesse que des conditions extérieures comme la température ambiante. La pompe électronisée est configurée pour déterminer des instructions d'écoulement du fluide de nettoyage en fonction de ces données.

Avantageusement, l'invention prévoit que l'unité électronique de commande 80 de la pompe électronisée 8 et l'unité électronique de gestion 7 du circuit de distribution 10 sont configurées pour communiquer entre elles.

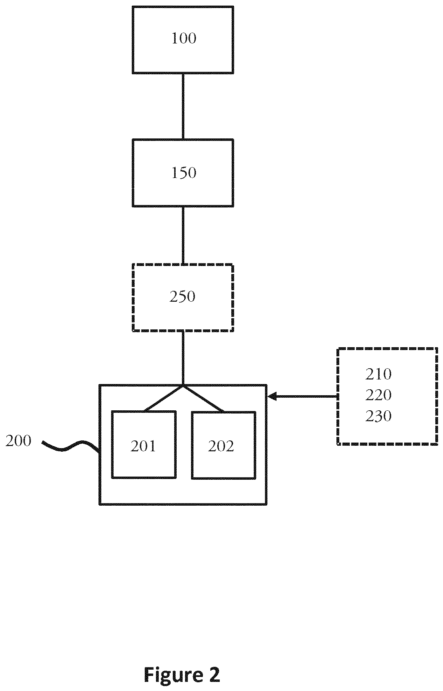

La figure 2 illustre schématiquement un procédé de nettoyage mettant en oeuvre un système de nettoyage 1 tel qu'il vient d'être décrit.

En référence à la figure 2, un tel procédé comprend une première étape 100 de réception, par l'unité électronique 7 de gestion du circuit de distribution 10, d'une requête de nettoyage d'un ou plusieurs capteurs 2 installés sur le véhicule 500. Selon que le système de nettoyage soit intégré en série sur le véhicule ou bien qu'il soit rapporté sur un véhicule déjà existant, cette requête de nettoyage peut être transmise directement à l'unité électronique 7 de gestion du circuit de distribution 10 ou bien être transmise par un module de contrôle du véhicule 9 configuré pour communiquer avec l'ensemble des capteurs 2 installés sur le véhicule 500. Selon un exemple, le module de contrôle 9 peut comprendre une unité de stockage d'un ensemble d'informations relatives au nettoyage des différents capteurs 2 : il peut s'agir, par exemple, de paramètres opératoires tels que, non exhaustivement, une durée de projection du fluide de nettoyage sur la surface optique de ces capteurs, une pression ou un débit de fluide de nettoyage à mettre en oeuvre pour réaliser le nettoyage des capteurs devant être nettoyés.

Le procédé selon l'invention comprend ensuite une étape 150 d'identification d'une ou plusieurs électrovannes 6 du circuit de distribution 10 gouvernant l'acheminement de fluide de nettoyage vers la pluralité de capteurs 2 visés par la requête de nettoyage reçue lors de la première étape 100 précédemment décrite. Il convient de noter qu'à l'installation du système de nettoyage sur le véhicule, des données d'appairage ont été stockées en mémoire dans l'unité électronique 7 de gestion du circuit de distribution, de sorte que cette unité électronique 7 est apte à sortir une information selon laquelle tel ou tel capteur visé par la requête de nettoyage doit être nettoyé via tel ou tel dispositifs de projection, le cas échéant par plusieurs, et donc qu'il convient d'activer telle ou telle électrovanne, le cas échéant plusieurs, pour nettoyer ledit capteur. Sans que cela soit limitatif de l'invention, ces données d'appairage peuvent être intégrées dans la pompe électronisée du réservoir.

Dans une étape suivante 200 du procédé selon l'invention, l'unité électronique 7 de gestion du circuit de distribution 10 et l'unité électronique de commande 80 de la pompe électronisée 8 commandent l'acheminement de fluide de nettoyage vers les dispositifs de projection 5 associés aux capteurs 2 à nettoyer, ainsi que la délivrance de fluide de nettoyage par les dispositifs de projection 5 précités. Plus précisément, l'unité électronique de commande 80 de la pompe électronisée 8 commande dans une première sous-étape 201 l'écoulement de fluide de nettoyage dans le conduit d'acheminement de fluide à une pression et un débit appropriés, et l'unité électronique 7 de gestion du circuit de distribution 10 commande dans une deuxième sous-étape 202 le fonctionnement des électrovannes 6 pour diriger le fluide vers les branches du circuit de distribution 10, ainsi que le fonctionnement des dispositifs de projection 5 précédemment évoqués.

Comme il a été indiqué précédemment, selon l'invention, l'écoulement de fluide de nettoyage vers les dispositifs de projection 5 est gouverné et modulé par la pompe électronisée 8, en fonction d'une ou plusieurs données relatives à l'opération de nettoyage à réaliser.

Selon un exemple, la modulation de l'écoulement du fluide de nettoyage peut être réalisée en fonction d'un paramètre 210 représentatif d'un type et/ou d'un nombre de capteurs 2 dont la surface optique doit être nettoyée. Tel que cela a été précédemment décrit, on peut ainsi moduler la pression du fluide de nettoyage apte à circuler dans le conduit 3 en sortie du réservoir de stockage, en fonction capteur à nettoyer, et donc en fonction de la référence de l'électrovanne qui va être activé et laisser passage au fluide en direction du dispositif de projection adéquat.

Selon un autre exemple, la modulation de l'écoulement du fluide de nettoyage peut être réalisée en fonction d'une température 220 à laquelle le fluide de nettoyage est soumis, de manière à prendre en compte une éventuelle variation de viscosité du fluide de nettoyage. L'unité électronique 7 de gestion du circuit de distribution 10 ou l'unité électronique de commande 80 de la pompe électronisée 8 sont configurées pour recevoir et traiter une information de température ambiante, le traitement de cette information consistant à déterminer via une table de calculs une pression ou un débit optimal(e) du fluide de nettoyage à projeter sur le capteur à nettoyer en fonction d'une température donnée. Pour un capteur nécessitant une pression de fluide de nettoyage de 4 bars dans des conditions de température standard, la pompe électronisée 8 modulera la pression du fluide de nettoyage lorsque ce capteur a besoin d'être nettoyé dans des conditions de température différentes : notamment, la pression du fluide de nettoyage sera augmentée lorsque la température sera plus basse, risquant d'augmenter la viscosité du fluide de nettoyage et la difficulté à le projeter sur le capteur.

Selon un autre exemple encore, la modulation de l'écoulement du fluide de nettoyage peut prendre en compte une vitesse 230 de déplacement du véhicule 500, de manière à limiter les effets d'une éventuelle dispersion du fluide de nettoyage autour du capteur 2 à nettoyer lors de la projection de ce fluide de nettoyage par un ou plusieurs dispositifs de projection 5.

Selon l'exemple illustré par la figure 2, le procédé tel qu'il vient d'être décrit comprend une étape supplémentaire 250 de génération d'une séquence de contrôle du fonctionnement d'une ou plusieurs électrovannes 6 du circuit de distribution 10. La séquence de contrôle générée lors de l'étape supplémentaire 250 a pour but de vérifier si les capteurs qui ne sont pas visés par une requête de nettoyage sont en état de fonctionnement et sont aptes à réaliser leur fonction d'acquisition de données sur la scène de route entourant le véhicule. Tel que cela a pu être précisé, le nettoyage d'un capteur implique que, pendant le laps de temps que dure cette opération, le capteur n'est plus capable d'envoyer des données fiables au système d'assistance à la conduite et il convient de s'assurer que les capteurs directement voisins de celui qu'on vise à nettoyer soient opérationnels. Selon cette caractéristique de l'invention, la vérification du bon fonctionnement des capteurs passe par une vérification de l'état d'ouverture ou de fermeture des électrovannes 6 correspondantes.

Une possibilité lors de cette étape supplémentaire est de lancer une requête générale à chacune des électrovannes pour vérifier l'état d'ouverture ou de fermeture de l'ensemble des électrovannes.

Une autre possibilité est de cibler les électrovannes à qui sont adressées ces requêtes, en fonction du capteur ayant fait l'objet d'une requête de nettoyage. Selon différents exemples, les électrovannes 6 dont l'état de fonctionnement est vérifié lors de l'étape supplémentaire 250 sont celles qui gouvernent l'acheminement de fluide de nettoyage dans des branches du circuit de distribution 10 associées à des capteurs 2 dont le rôle, au sein du véhicule 500, est similaire au rôle des capteurs 2 à nettoyer lors de l'opération de nettoyage à effectuer, ou dont les paramètres de nettoyage sont similaires aux paramètres de nettoyage de ces capteurs. Selon un autre exemple, les électrovannes 6 dont l'état de fonctionnement est vérifié lors de l'étape supplémentaire 250 sont celles qui gouvernent l'acheminement de fluide de nettoyage dans des branches du circuit de distribution 10 associées à des capteurs 2 situés dans le voisinage proche des capteurs 2 à nettoyer.

Ainsi, en référence à la figure 1, dans le cas où une requête de nettoyage d'un premier capteur 2, par exemple un capteur de type LIDAR fonctionnant par émission/réception d'ondes électromagnétiques disposé en face avant du véhicule, est transmise à l'unité électronique 7 de gestion du circuit de distribution 10, l'étape supplémentaire 250 précédemment définie peut consister en un contrôle de l'état des électrovannes 6 gouvernant, par exemple, la distribution de fluide nettoyant vers les autres capteurs agencés en face avant et susceptibles d'acquérir des données redondantes par rapport à celles détectées par le premier capteur.

En d'autres termes, si l'étape supplémentaire 250 permet, d'une part, d'éviter toute fuite de fluide de nettoyage à destination d'un dispositif de projection 5 qui ne serait pas concerné par l'opération de nettoyage réalisée lors du procédé selon l'invention, elle permet également, d'autre part, de s'assurer que l'opération de nettoyage d'un premier capteur pourra être faite dans des conditions de sécurité, avec les autres capteurs susceptibles de détecter des informations de la même portion de la scène de route que le premier capteur qui sont en parfait état de fonctionnement. Dans le cas contraire, si l'opération de nettoyage du premier capteur ne peut être assurée sans un risque de perte d'informations, un message peut être envoyé au conducteur, ou module central pilotant de façon autonome le véhicule, pour lui indiquer qu'une opération de nettoyage doit être effectué et qu'il est nécessaire pour cela d'arrêter le véhicule.

Ceci présente un intérêt particulier dans le cas de véhicules 500 autonomes, dans lesquels plusieurs capteurs 2 de même type peuvent être installés au voisinage les uns des autres pour fournir à une unité de pilotage du véhicule un ensemble de données de même nature utilisées pour le pilotage de ce véhicule. De telles données de même nature peuvent être, par exemple, des images, prises sous différents angles de vue, d'une scène avant du véhicule 500. On comprend aisément que, dans un tel contexte, une opération de nettoyage d'un capteur réalisant une telle prise de vues sera avantageusement conditionnée par une continuité de réception, par l'unité de pilotage du véhicule, d'images de qualité provenant des capteurs de même nature situés à proximité du ou des capteurs nettoyés.

L'invention, telle qu'elle vient d'être décrite, ainsi que le procédé de nettoyage auquel elle s'étend, permet donc, par une simple modulation d'un paramètre d'écoulement d'un fluide de nettoyage dans un circuit de distribution, de réaliser un nettoyage efficace d'une pluralité de capteurs 2 d'un véhicule automobile 500, avec une consommation optimisée de fluide de nettoyage.

## Revendications

1. Système de nettoyage (1) d'une pluralité de capteurs (2, 2a, 2b, 2c, 2d) d'un véhicule automobile (500), comprenant une pluralité de dispositifs de projection (5) d'un fluide de nettoyage sur les capteurs (2, 2a, 2b, 2c, 2d) et comprenant un réservoir de stockage (4) du fluide de nettoyage, le système de nettoyage comportant un circuit de distribution (10) relié au réservoir de stockage (4) et sur lequel chacun des dispositifs de projection est raccordé via une électrovanne (6, 6a, 6b, 6c) qui lui est propre, le système de nettoyage comportant en outre une unité électronique de gestion (7) configurée pour commander le fonctionnement d'au moins le circuit de distribution (10), **caractérisé en ce qu'**il comporte une pompe électronisée (8) dont une unité électronique de commande (80) est configurée pour modifier un paramètre d'écoulement du fluide de nettoyage dans le circuit de distribution (10), selon la ou les électrovannes (6) qui vont être activées et les dispositifs de projection (5) qui vont être alimentés par le fluide de nettoyage.

2. Système de nettoyage (1) selon la revendication précédente, **caractérisé en ce que** l'unité électronique de commande (80) est configurée pour modifier une pression du fluide de nettoyage dans le circuit de distribution (10).

3. Système de nettoyage (1) selon la revendication 1, **caractérisé en ce que** l'unité électronique de commande (80) est configurée pour modifier un débit du fluide de nettoyage dans le circuit de distribution (10).

4. Système de nettoyage (1) selon l'une quelconque des revendications précédentes, **caractérisé en ce que** l'unité électronique de commande (80) est configurée pour générer une instruction de commande de la pompe électronisée (8) en fonction de données relatives à la nature du ou des capteurs (2, 2a, 2b, 2c, 2d) à nettoyer.

5. Système de nettoyage (1) selon l'une quelconque des revendications précédentes, **caractérisé en ce que** l'unité électronique de commande (80) est configurée pour générer une instruction de commande de la pompe électronisée (8) en fonction d'un nombre de capteurs (2, 2a, 2b, 2c, 2d) à nettoyer.

6. Système de nettoyage (1) selon l'une quelconque des revendications précédentes, **caractérisé en ce que** l'unité électronique de commande (80) est configurée pour générer une instruction de commande de la pompe électronisée (8) en fonction d'une température extérieure (220).

7. Système de nettoyage (1) selon l'une quelconque des revendications précédentes, **caractérisé en ce que** l'unité électronique de commande (80) est configurée pour générer une instruction de commande de la pompe électronisée (8) en fonction d'une vitesse de déplacement (230) du véhicule (500).

8. Système de nettoyage (1) selon l'une quelconque des revendications précédentes, **caractérisé en ce que** l'unité électronique de commande (80) est configurée pour générer une séquence de contrôle du fonctionnement de électrovannes (6) du circuit de distribution (10).

9. Système de nettoyage (1) selon l'une quelconque des revendications précédentes, **caractérisé en ce que** l'unité électronique de commande (80) est configurée pour modifier la vitesse de rotation d'un moteur électrique gouvernant le fonctionnement de la pompe électronisée (8) sur la base d'une variation d'un signal de commande du fonctionnement de ce moteur électrique, l'unité électronique de commande (80) étant configurée pour modifier l'écoulement du fluide de nettoyage acheminé par la pompe électronisée (8).

10. Procédé de nettoyage d'une pluralité de capteurs (2, 2a, 2b, 2c, 2d) d'un véhicule automobile (500) par un système de nettoyage (1) selon l'une quelconque des revendications précédentes, comprenant :
- une étape (100) de réception, par une unité électronique de gestion (7) d'un circuit de distribution (10) du système de nettoyage (1) configurée pour communiquer avec une unité électronique de commande (80) d'une pompe électronisée (8) du système de nettoyage (1), d'une requête de nettoyage d'une pluralité de capteurs (2, 2a, 2b, 2c, 2d),
- une étape (150) d'identification d'une ou plusieurs électrovannes (6) du circuit de distribution (10) gouvernant l'acheminement de fluide de nettoyage vers la pluralité de capteurs (2, 2a, 2b, 2c, 2d) à nettoyer,
- une étape (200) de génération, par l'unité électronique de commande (80) de la pompe électronisée (8), d'une instruction de modification d'un paramètre d'écoulement du fluide de nettoyage dans le circuit de distribution (10).

11. Véhicule automobile (500) équipé d'un système de nettoyage (1) selon l'une quelconque des revendications 1 à 8.

## Patentansprüche

1. System zur Reinigung (1) einer Vielzahl von Sensoren (2, 2a, 2b, 2c, 2d) eines Kraftfahrzeugs (500), das eine Vielzahl von Vorrichtungen zum Spritzen (5) einer Reinigungsflüssigkeit auf die Sensoren (2, 2a, 2b, 2c, 2d) beinhaltet und einen Vorratsbehälter (4) für die Reinigungsflüssigkeit beinhaltet, wobei das Reinigungssystem einen Verteilerkreis (10) umfasst, der mit dem Vorratsbehälter (4) verbunden ist und mit dem jede der Spritzvorrichtungen über ein eigenes Magnetventil (6, 6a, 6b, 6c) verbunden ist, wobei das Reinigungssystem ferner eine elektronische Verwaltungseinheit (7) umfasst, die dazu konfiguriert ist, den Betrieb von mindestens dem Verteilerkreis (10) zu steuern, **dadurch gekennzeichnet, dass** es eine elektronisierte Pumpe (8) umfasst, von der eine elektronische Steuereinheit (80) dazu konfiguriert ist, einen Strömungsparameter der Reinigungsflüssigkeit in dem Verteilerkreis (10) zu ändern, je nachdem, welches oder welche Magnetventile (6) aktiviert werden und welche Spritzvorrichtungen (5) mit der Reinigungsflüssigkeit versorgt werden.

2. Reinigungssystem (1) nach dem vorhergehenden Anspruch, **dadurch gekennzeichnet, dass** die elektronische Steuereinheit (80) dazu konfiguriert ist, einen Druck der Reinigungsflüssigkeit in dem Verteilerkreis (10) zu ändern.

3. Reinigungssystem (1) nach Anspruch 1, **dadurch gekennzeichnet, dass** die elektronische Steuereinheit (80) dazu konfiguriert ist, eine Durchflussmenge der Reinigungsflüssigkeit in dem Verteilerkreis (10) zu ändern.

4. Reinigungssystem (1) nach einem beliebigen der vorhergehenden Ansprüche, **dadurch gekennzeichnet, dass** die elektronische Steuereinheit (80) dazu konfiguriert ist, eine Steueranweisung für die elektronisierte Pumpe (8) in Abhängigkeit von Daten über die Art des oder der zu reinigenden Sensoren (2, 2a, 2b, 2c, 2d) zu generieren.

5. Reinigungssystem (1) nach einem beliebigen der vorhergehenden Ansprüche, **dadurch gekennzeichnet, dass** die elektronische Steuereinheit (80) dazu konfiguriert ist, eine Steueranweisung für die elektronisierte Pumpe (8) in Abhängigkeit von einer Anzahl von zu reinigenden Sensoren (2, 2a, 2b, 2c, 2d) zu generieren.

6. Reinigungssystem (1) nach einem beliebigen der vorhergehenden Ansprüche, **dadurch gekennzeichnet, dass** die elektronische Steuereinheit (80) dazu konfiguriert ist, eine Steueranweisung für die elektronisierte Pumpe (8) in Abhängigkeit von einer Außentemperatur (220) zu generieren.

7. Reinigungssystem (1) nach einem beliebigen der vorhergehenden Ansprüche, **dadurch gekennzeichnet, dass** die elektronische Steuereinheit (80) dazu konfiguriert ist, eine Steueranweisung für die elektronisierte Pumpe (8) in Abhängigkeit von einer Fahrgeschwindigkeit (230) des Fahrzeugs (500) zu generieren.

8. Reinigungssystem (1) nach einem beliebigen der vorhergehenden Ansprüche, **dadurch gekennzeichnet, dass** die elektronische Steuereinheit (80) dazu konfiguriert ist, eine Sequenz zur Kontrolle des Betriebs der Magnetventile (6) des Verteilerkreises (10) zu generieren.

9. Reinigungssystem (1) nach einem beliebigen der vorhergehenden Ansprüche, **dadurch gekennzeichnet, dass** die elektronische Steuereinheit (80) dazu konfiguriert ist, die Drehzahl eines Elektromotors, der den Betrieb der elektronisierten Pumpe (8) regelt, auf Basis einer Variation eines Steuersignals für den Betrieb dieses Elektromotors zu ändern, wobei die elektronische Steuereinheit (80) dazu konfiguriert ist, die Strömung der durch die elektronisierte Pumpe (8) zugeführten Reinigungsflüssigkeit zu ändern.

10. Verfahren zur Reinigung einer Vielzahl von Sensoren (2, 2a, 2b, 2c, 2d) eines Kraftfahrzeugs (500) durch ein Reinigungssystem (1) nach einem beliebigen der vorhergehenden Ansprüche, das Folgendes beinhaltet:
- einen Schritt (100) des Empfangens, durch eine elektronische Verwaltungseinheit (7) eines Verteilerkreises (10) des Reinigungssystems (1), die dazu konfiguriert ist, mit einer elektronischen Steuereinheit (80) einer elektronisierten Pumpe (8) des Reinigungssystems (1) zu kommunizieren, einer Anforderung zur Reinigung einer Vielzahl von Sensoren (2, 2a, 2b, 2c, 2d),
- einen Schritt (150) des Identifizierens eines oder mehrerer Magnetventile (6) des Verteilerkreises (10), die die Zufuhr von Reinigungsflüssigkeit zu der Vielzahl von zu reinigenden Sensoren (2, 2a, 2b, 2c, 2d) regeln,
- einen Schritt (200) des Generierens, durch die elektronische Steuereinheit (80) der elektronisierten Pumpe (8), einer Anweisung zur Änderung eines Strömungsparameters der Reinigungsflüssigkeit in dem Verteilerkreis (10).

11. Kraftfahrzeug (500), das mit einem Reinigungssystem (1) nach einem beliebigen der Ansprüche 1 bis 8 ausgerüstet ist.

## Claims

1. System (1) for cleaning a plurality of sensors (2, 2a, 2b, 2c, 2d) of a motor vehicle (500), comprising a plurality of devices (5) for spraying a cleaning fluid onto the sensors (2, 2a, 2b, 2c, 2d) and comprising a cleaning fluid storage reservoir (4), the cleaning system comprising a distribution circuit (10) connected to the storage reservoir (4) and to which each of the spray devices is connected via a solenoid valve (6, 6a, 6b, 6c) specific to it, the cleaning system further comprising an electronic control unit (7) configured to control the operation of at least the distribution circuit (10), **characterized in that** it comprises an electronically controlled pump (8), the control electronics (80) of which are configured to modify a parameter pertaining to the flow of the cleaning fluid in the distribution circuit (10), on the basis of which solenoid valve or valves (6) are to be actuated and which spray devices (5) are to be supplied with the cleaning fluid.

2. Cleaning system (1) according to the preceding claim, **characterized in that** the control electronics (80) are configured to modify a pressure of the cleaning fluid in the distribution circuit (10).

3. Cleaning system (1) according to Claim 1, **characterized in that** the control electronics (80) are configured to modify a flow rate of the cleaning fluid in the distribution circuit (10).

4. Cleaning system (1) according to any one of the preceding claims, **characterized in that** the control electronics (80) are configured to generate an instruction for controlling the electronically controlled pump (8) on the basis of data relating to the nature of the sensor or sensors (2, 2a, 2b, 2c, 2d) to be cleaned.

5. Cleaning system (1) according to any one of the preceding claims, **characterized in that** the control electronics (80) are configured to generate an instruction for controlling the electronically controlled pump (8) on the basis of a number of sensors (2, 2a, 2b, 2c, 2d) to be cleaned.

6. Cleaning system (1) according to any one of the preceding claims, **characterized in that** the control electronics (80) are configured to generate an instruction for controlling the electronically controlled pump (8) on the basis of an external temperature (220).

7. Cleaning system (1) according to any one of the preceding claims, **characterized in that** the control electronics (80) are configured to generate an instruction for controlling the electronically controlled pump (8) on the basis of a speed of travel (230) of the vehicle (500).

8. Cleaning system (1) according to any one of the preceding claims, **characterized in that** the control electronics (80) are configured to generate a control sequence for controlling the operation of the solenoid valves (6) of the distribution circuit (10).

9. Cleaning system (1) according to any one of the preceding claims, **characterized in that** the control electronics (80) are configured to modify the rotational speed of the electric motor that governs the operation of the electronically controlled pump (8), on the basis of a variation in a control signal controlling the operation of this electric motor, the control electronics (80) being configured to modify the flow of the cleaning fluid conveyed by the electronically controlled pump (8).

10. Method for cleaning at a plurality of sensors (2, 2a, 2b, 2c, 2d) of a motor vehicle (500) using a cleaning system (1) according to any one of the preceding claims, comprising:
- a step (100) whereby an electronic control unit (7) of a distribution circuit (10) of the cleaning system (1), which unit is configured to communicate with the control electronics (80) of an electronically controlled pump (8) of the cleaning system (1), receives a request to clean a plurality of sensors (2, 2a, 2b, 2c, 2d),
- a step (150) of identifying one or more solenoid valve(s) (6) of the distribution circuit (10) governing the routing of cleaning fluid to the plurality of sensors (2, 2a, 2b, 2c, 2d) to be cleaned,
- a step (200) whereby the control electronics (80) of the electronically controlled pump (8) generate an instruction to modify a parameter pertaining to the flow of the cleaning fluid in the distribution circuit (10).

11. Motor vehicle (500) equipped with a cleaning system (1) according to any one of Claims 1 to 8.
